# EUROPÄISCHE PATENTSCHRIFT

(11) **EP 2 366 186 B1**
(45) Veröffentlichungstag und Bekanntmachung des Hinweises auf die Patenterteilung: **24.08.2016**
(21) Anmeldenummer: 09797002.4
(22) Anmeldetag: 10.12.2009
(51) Int. Cl.: H01F 1/01

(54) **BESCHICHTETES MAGNETISCHES LEGIERUNGSMATERIAL UND VERFAHREN ZU SEINER HERSTELLUNG**
COATED MAGNETIC ALLOY MATERIAL AND PROCESS OF MANUFACTURING THE SAME
ALLIAGE DE MATÉRIAU MAGNÉTIQUE AVEC REVÊTEMENT ET SON PROCÉDÉ DE PRODUCTION

(30) Priorität: 11.12.2008 DE 102008054522
(43) Veröffentlichungstag der Anmeldung: 21.09.2011
(73) Patentinhaber: Leibniz-Institut für Festkörper- und Werkstoffforschung Dresden e.V., 01069 Dresden (DE)
(72) Erfinder: LYUBINA, Julia, London, SW113LG (GB); BUSCHBECK, Mikaela, 01069 Dresden (DE); GUTFLEISCH, Oliver, 01309 Dresden (DE)
(74) Vertreter: Rauschenbach, Marion
(86) Internationale Anmeldenummer: PCT/EP2009/066871
(87) Internationale Veröffentlichungsnummer: WO 2010/066856

(56) Entgegenhaltungen:
- WO-A1-2004/038055
- WO-A1-2008/099234
- JP-A- 2005 120 391

## Beschreibung

Die Erfindung bezieht sich auf das Gebiet der Werkstoffwissenschaften und der Materialphysik und betrifft ein Verfahren zur Herstellung eines beschichteten magnetischen Legierungsmaterials, welches beispielsweise als magnetisches Kühlmaterial (magnetokalorisches Material) für Kühlzwecke oder für Energieerzeugungszwecke eingesetzt werden kann.

Die magnetische Kühlung durch magnetische Legierungsmaterialien eröffnet eine umweltfreundliche, energie- und kosteneffektive Alternative zu der konventionellen Gaskompressionskühlung. Die magnetische Kühlung basiert auf dem magnetokalorischen Effekt (MCE = magnetocaloric effect), bei welchem eine Temperaturänderung infolge der Änderung der Magnetisierung des Materials auftritt. Für Anwendungen sind insbesondere Materialien mit einem großen MCE interresant.

Magnetische Materialien mit einer Kristallstruktur von NaZn₁₃-Typ zeigen dabei einen besonders großen MCE, der durch einen thermisch- und feld-induzierten Phasenübergang vom paramagnetischen zum ferromagnetischen Zustand nahe der Curie-Temperatur T_{c} des Materials verursacht wird.

Magnetische Legierungsmaterialien der Kristallstruktur vom Typ NaZn₁₃ sind bekannt und könnten als magnetische Kühlmaterialien eingesetzt werden. Die Zusammensetzung derartiger Materialien kann durch die Formel R(T₁₋ₐMₐ)₁₃H_{d} angegeben werden, wobei für R Seltenerdelemente oder eine Kombination Seltenerdelemente, für T Fe oder eine Kombination von Fe und Co und für M Al, Si, Ga oder Ge oder Kombinationen davon eingesetzt werden. Für a gilt 0,05 ≤ a ≤ 0,2 und für d gilt 0 ≤ d ≤ 3,0. Derartige Materialien weisen sehr gute magnetokalorische Eigenschaften bei Temperaturen nahe Curie-Temperatur auf und sind als erfolgversprechende Kandidaten für die magnetische Kühlung eingestuft (C. Zimm et al., Int. J. Refrigeration 29 (2006) 1302-1306).Weiterhin bekannt sind derartige magnetische Legierungsmaterialien vom NaZn₁₃-Typ mit Zusammensetzungen gemäß der Formel Fe_{100-a-b-c}RₐA_{b}TM_{c} mit R = Seltenerden aus der Gruppe La, Ce, Pr, Nd, Pm, Sm, Eu, Gd, Tb, Dy, Ho, Er und Tm mit mindestens 90 Atom-% La, mit A = mindestens ein Element von Al, Si, Ga, Ge, Sn, und mit TM = mindestens ein Übergangselement von Sc, Ti, V, Cr, Mn, Co, Ni, Cu und Zn, wobei 5 ≤ a≤ 10, 4,7 ≤ b ≤ 18 und 0 ≤ c ≤ 9 (alles Atom-%) (DE 103 38 467 A1, US 2007/0137732 A1, US 2004/007944 A1, US 7,186,303 B2, US 2006/0231163 A1, US 2005/0172643 A1, WO 2008/099234 A1).

Bekanntermaßen werden derartige magnetische Legierungen mittels eines Lichtbogen- oder Hochfrequenz-Schmelzverfahrens hergestellt und anschließend für beispielsweise ca. 168 h bei etwa 1050 °C unter Vakuum (DE 103 38 467 A1) wärmebehandelt. Ebenfalls ist es möglich, die Legierungselemente bei 1200 bis 1800 °C aufzuschmelzen, dann mit Abkühlgeschwindigkeiten von 10² bis 10⁶ °C/s die Legierung abzukühlen (rasch erstarren) und anschließend die rascherstarrte Legierung thermisch zu behandeln (US 2006/0076084 A1; A. Yan, K.-H. Müller, O. Gutfleisch, J. Appl. Phys. 97 (2005) 036102; X.B. Liu, Z. Altounian, G.H. Tu, J. Phys.: Condens. Matter 16 (2004) 8043.).

Ebenfalls bekannt ist ein Verfahren zur Herstellung eines magnetischen Materials, bei dem magnetische Partikel mit der Zusammensetzungsformel La_{A}Si_{B}H_{c}Fe_{bal} mit einem Metallfilm aus Sn oder einer Sn-Legierung beschichtet werden und anschließend unter Inertgasatmosphäre bei 100°C bis 300 °C thermisch behandelt werden, sodass sich die magnetischen Partikel miteinander verbinden und die entstandene Masse eine Porösität von 20% bis 35% aufweist (JP 2005-120391 A).

Weiterhin bekannt ist ein Verfahren zur Herstellung einer magnetischen Legierung in der Zusammensetzung der Formel R(T₁₋ₓAₓ)_{13y} an, bei dem die Legierung in einem ersten Schritt bei 1200 bis 1800°C aufgeschmolzen und in einem zweiten Schritt durch schnelles Abkühlen verfestigt wird (WO 2004/038055 A1).

Ein wesentlicher Nachteil der bekannten magnetischen Legierungsmaterialien vom NaZn₁₃-Typ sind ihre schlechten mechanischen Eigenschaften, insbesondere ihre geringe Duktilität und mechanische Integrität, und geringe Korrosionsbeständigkeit. Damit werden die Einsatzbedingungen und die Auswahl der Wärmeübertragungsmedien stark eingeschränkt.

Die Aufgabe der vorliegenden Erfindung besteht in der Angabe eines beschichteten magnetischen Legierungsmaterials, welches bei vergleichbaren magnetischen und/oder magnetokalorischen Eigenschaften gegenüber den Materialien des Standes der Technik verbesserte mechanische und/oder chemische Eigenschaften aufweist und in der Angabe eines effektiven Verfahrens zur Beschichtung des magnetischen Legierungsmaterials, bei welchem die Anwendungstemperatur dieses magnetischen Legierungsmaterials durch Einstellung der Curie-Temperatur in relativ weiten Grenzen realisiert wird.

Die Aufgabe wird durch die in den Ansprüchen angegebene Erfindung gelöst. Vorteilhafte Ausgestaltungen sind Gegenstand der Unteransprüche.

Das erfindungsgemäße beschichtete magnetische Legierungsmaterial besteht aus > 50 Vol.-% eines magnetischen Legierungsmaterials der Kristallstruktur vom NaZn₁₃-Typ und einer Zusammensetzung gemäß der Formel:

RₐFe_{100-a-x-y-z}TₓM_{y}L_{z}

mit
R = La oder eine Kombination von La mit Ce, Pr, Nd, Sm, Gd, Tb, Dy, Ho, Er, Tm, Yb, Lu und/oder Y,
T = mindestens ein Element ausgewählt aus der Gruppe Sc, Ti, V, Cr, Mn, Co, Ni, Cu und/oder Zn,
M = Al, Si, P, Ga, Ge, In und/oder Sn,
L = H, B, C und/oder N,
   5 ≤ a ≤ 11 und 0.3 ≤ x ≤ 12 und 2 ≤ y ≤ 20 und 0.2 ≤ z ≤ 18, (alles in Atom-%),
und dessen Oberfläche mit einem Material, bestehend aus mindestens einem Element von der Gruppe Al, Si, C, Sn, Ti, V, Cd, Cr, Mn, W, Co, Ni, Cu, Zn, Pd, Ag, Pt, Au oder Kombinationen davon, aus der flüssigen Phase mittels stromlosen Metallisierens beschichtet ist.

Vorteilhafterweise weisen > 35 Vol.-%, noch vorteilhafterweise mindestens 50 Vol.-%, und noch vorteilhafterweise 80 - 90 Vol.-%, des magnetischen Legierungsmaterials eine Kristallstruktur vom NaZn₁₃-Typ, auf.

Ebenfalls vorteilhafterweise sind zur Veränderung der Curie-Temperatur des magnetischen Legierungsmaterials die Bedingung 2 ≤ z ≤ 15 Atom-% und/oder 3 ≤ y ≤ 16 und/oder 0.5 ≤ x ≤ 9 realisiert, wobei mit variierendem Anteil z und/oder y und/oder x die Curie-Temperatur sich zwischen 170 K und 400 K ändert.

Vorteilhaft ist es auch, wenn das magnetische Legierungsmaterial in Form eines Bandes, eines Drahtes, einer Platte, einer Folie oder einer Flocke, einer Nadel, eines Schaumes oder in Form von Partikeln vorliegt.

Auch vorteilhaft ist es, wenn die Schichtdicke der Beschichtung in Abhängigkeit von der Größe des magnetokalorischen Effektes des Legierungsmaterials ausgewählt ist, wobei noch vorteilhafterweise die Schichtdicke der Beschichtung ≤ 0.5 µm bis ≤ 50 µm beträgt.
Weiterhin vorteilhaft ist es, wenn zwischen magnetischen Legierungsmaterial und der Beschichtung eine oder mehrere Haftschichten vorhanden sind.

Und ebenfalls vorteilhaft ist es, wenn die Oberfläche des unbeschichteten Legierungsmaterials geätzt ist.

Bei dem erfindungsgemäßen Verfahren zur Herstellung eines beschichteten magnetischen Legierungsmaterials wird das magnetische Legierungsmaterial mittels Verfahren aus der flüssigen Phase beschichtet.

Vorteilhafterweise wird die Beschichtung aus der flüssigen Phase durch elektrochemische Beschichtung, stromloses Metallisieren (electroless plating), Tauchen, Aufschleudern, Sprühen und/oder Streichen realisiert.

Ebenfalls vorteilhafterweise wird die Beschichtung durch elektrochemische Beschichtung oder stromloses Metallisieren aufgebracht.
Mit der erfindungsgemäßen Lösung wird es erstmals möglich, ein magnetisches Legierungsmaterial anzugeben, dessen mechanische und chemische Eigenschaften, insbesondere die elastische Festigkeit und die Korrosionsbeständigkeit, bei Beibehaltung der guten magnetischen Eigenschaften bezüglich des magnetokalorischen Effektes, deutlich verbessert worden sind. Dies wird erfindungsgemäß durch eine Beschichtung der Oberfläche des magnetischen Legierungsmaterials erreicht, wobei zwischen der Oberfläche des magnetischen Legierungsmaterials und der Beschichtung noch eine oder mehrere weitere Schichten, wie beispielsweise Haftschichten, vorhanden sein können. Vorheriges Ätzen kann für eine bessere Haftung durchgeführt werden. Bei einem derartigen Schichtaufbau und auch bezüglich der Schichtdicke der Schichten insgesamt ist zu beachten, dass diese nur solche Abmessungen haben sollten, dass der magnetokalorische Effekt des magnetischen Legierungsmaterials noch in der gewünschten Höhe erreicht wird. Beispielsweise kann bei einer massiven Platte aus dem magnetischen Legierungsmaterial eine deutlich höhere Schichtdicke der Beschichtung aufgebracht werden, da durch das größere Volumen des Legierungsmaterials der magnetokalorische Effekt nicht oder nur unwesentlich beeinträchtigt wird. Im umgekehrten Falle darf die Schichtdicke nur sehr gering sein, wenn das magnetische Legierungsmaterial beispielsweise ein dünnes Metallband ist. Dieser Zusammenhang ist dem Fachmann an sich bekannt und er ist in der Lage, die entsprechenden Schichtdicken der erfindungsgemäßen Beschichtung gemäß den konkreten Anwendungsbedingungen ohne Weiteres auszuwählen. Generell wird aber eine möglichst geringe Schichtdicke der erfindungsgemäßen Beschichtung angestrebt, um die Grösse des magnetokalorischen Effektes des magnetischen Materials möglichst wenig zu beeinflussen.

Die erfindungsgemäße Beschichtung zeigt deutlich bessere mechanische Eigenschaften als das magnetische Legierungsmaterial, was zu deutlichen Verbesserungen bei den Anwendungen des erfindungsgemäßen Materials aus dem beschichteten magnetischen Legierungsmaterial insgesamt auswirkt. Ebenfalls wird durch die vollständige Beschichtung des magnetischen Legierungsmaterials dessen Oberfläche gegen den korrosiven Angriff verschiedener Wärmeübertragungsmedien geschützt, so dass daher die Auswahl der Medien nicht mehr vom magnetischen Legierungsmaterial abhängt. Auch dadurch werden die Anwendungsmöglichkeiten deutlich verbessert.

Die erfindungsgemäße Lösung zeigt insbesondere verbesserte Ergebnisse beim überwiegenden Einsatz von magnetischen Legierungsmaterialien, deren Kristallstruktur vom NaZn₁₃-Typ ist. Diese Materialien zeigen bekanntermaßen einen großen magnetokalorischen Effekt und sind deshalb besonders vorteilhaft einsetzbar.

Ebenfalls vorteilhaft ist es, wenn die erfindungsgemäße Lösung für magnetische Legierungsmaterialien eingesetzt wird, die eine Zusammensetzung gemäß der Formel RₓT_{100-x-y-z}M_{y}L_{z} mit den bekannten Elementen, Elementkombinationen und Anteilen aufweisen.

Dabei ist besonders vorteilhaft, wenn insbesondere H, B, C und/oder N in dem Legierungsmaterial vorhanden sind. Diese Elemente werden bekanntermaßen auf Zwischengitterplätze eingebaut und wirken sich insbesondere auf die für magnetische Legierungsmaterialien wichtige Curie-Temperatur T_{c}, die bekanntermaßen die Anwendungstemperatur bestimmt, aus, indem mit steigendem Anteil dieser Elemente, und dabei insbesondere H, die Curie-Temperatur erhöht wird. Damit ist eine Anwendungstemperatur für das magnetische Legierungsmaterial in relativ weiten Grenzen einstellbar.

Mit der erfindungsgemäßen Beschichtungsmethode aus der flüssigen Phase, wie der elektrochemischen Beschichtung oder Beschichtung durch stromloses Metallisieren, kann gleichzeitig Wasserstoff interstitiell in das Kristallgitter eingebracht werden oder Elemente, wie z.B. Co, Ni, Cu, durch Diffusionsprozesse Fe substituieren und dabei die Curie-Temperatur T_{c} erhöhen. Der Wasserstoff kann bei einer sekundären Reaktion entstehen, wie z.B. als Beiprodukt einer kathodischen Elektrodenreaktion oder während der Oxidation des Reduktionsmittels freigesetzt werden. So zeigt sich dieser Effekt auch bei der erfindungsgemäßen Lösung in nahezu unveränderter Art und Weise, so dass neben verbesserten mechanischen und chemischen Eigenschaften auch verbesserte primäre Eigenschaften, wie Anwendungstemperatur und Größe der MCE, mit der erfindungsgemäßen Lösung erreicht werden können.

Weiterhin kann die Beschichtung auf die Oberfläche des magnetischen Legierungsmaterials unabhängig von der jeweils konkreten Form des magnetischen Legierungsmaterials aufgebracht werden. Je nach vorliegender Form des magnetischen Legierungsmaterials, vorteilhafterweise als Band, Draht, Platte, Folie, Flocke, Nadel, Schaum oder Partikel, ist das anzuwendende Beschichtungsverfahren auszuwählen.

Als besonders vorteilhaft haben sich die elektrochemische Beschichtung oder das stromlose Metallisieren erwiesen, da mit diesen Verfahren auf einfache Art und Weise die Beschichtung in gewünschter Schichtdicke auf alle geometrischen Formen des magnetischen Legierungsmaterials aufgebracht werden kann. Mit diesen Verfahren ist auch gleichzeitig die Einbringung des Wasserstoffs oder Elementen wie z.B. Co und Ni zur Einstellung der Curie-Temperatur mittels Diffusionsprozessen problemlos möglich.
Die Beschichtungsverfahren sind industriell weit verbreitet und daher auch sehr kostengünstig, so dass Materialien in unbeschränkter Menge uniform und allseitig beschichtet werden können. Die Beschichtungsverfahren benötigen kein Vakuum oder eine spezielle Atmosphäre und sie werden bei Temperaturen zwischen Raumtemperatur und ca. 80°C angewandt.
Ein weiterer Vorteil des stromlosen Metallisierens besteht in der Möglichkeit Materialien zu beschichten, indem sie in eine Lösung ohne Anlegen von externem Strom eingetaucht werden. Dabei läuft ein autokatalytischer Prozess basierend auf der Oxidation eines Reduktionsmittels und der Reduktion von Kationen an der Probenoberfläche des abzuscheidenden Materials ab.

Nachfolgend wird die Erfindung an zwei Ausführungsbeispielen näher erläutert.

### Beispiel 1

Aus den Elementen La, Fe und Si wird mittels eines Lichtbogen-Schmelzverfahrens eine Legierung mit der Zusammensetzung LaFe_{11,6}Si_{1,4} hergestellt. Die Legierung wird danach mit der Oberflächengeschwindigkeit des Kupferrades von 30 m/s rasch erstarrt und anschließend bei 1050 °C für 1 Stunde wärmebehandelt [A. Yan, K.-H. Müller, O. Gutfleisch, J. Appl. Phys. 97 (2005) 036102]. Das resultierende Material ist in Form eines Bandes mit einer Dicke von 60 µm und besteht zu 90 Gew.-% aus der NaZn₁₃-Typ-Phase und zu 10 Gew.-% aus α-Fe.

Auf dieses Band wird durch das stromloses Metallisieren für 30 Minuten eine 1 µm dicke Schicht aus Ni aufgebracht. Das stromlose Metallisieren erfolgt aus einer auf 80°C erhitzten Lösung mit der Zusammensetzung konform A. Brenner [A. Brenner et al., Res. Natl. Bur. Std. 37 (1946) 31; Proc. Am. Electroplaters' Soc., 33 (1946) 23] bei einem pH Wert von 9.

Die mit Ni beschichteten Bänder zeigen eine Erhöhung der elastischen Festigkeit um mindestens 25 % im Vergleich zu unbeschichteten Bändern.

Mit der Beschichtung des Bandes ist das Band gegenüber den Wärmeübertragungsmedien aus öligen, alkoholischen oder wässrigen Lösungen nun korrosionsbeständig. Die Masseverlust, ermittelt durch Messungen in 0,01 M Schwefelsäure (pH = 2), zeigt eine wesentlich höhere Stabilität des beschichteten Bandes gegenüber dem eines unbeschichteten Materials. Das unbeschichtete Material zeigt eine Änderung der Masse um 15 % schon nach 3 Minuten Eintauchen in der Lösung und ist nach 5 Minuten nicht mehr mechanisch stabil, so dass es zu kleinere Stücken und letztendlich nach 10 Minuten Eintauchen zu Pulver zerfällt.

Währendessen zeigt das erfindungsgemäß beschichtete Band auch nach 40 Minuten Eintauchen in der Lösung einen Masseverlust von weniger als 1 % und ist weiterhin mechanisch stabil.

Darüber hinaus zeigt der oben erwähnte Versuch anschaulich die Verbesserung der mechanischen Eigenschaften des Bandes gegenüber den Wärmeübertragungsmedien.

Gleichzeitig mit der oben beschriebenen Ni-Beschichtung entsteht durch die Oxidation des Reduktionsmittel (Natrium Hypophosphit) an der Materialoberfläche atomarer Wasserstoff. Der Wasserstoff diffundiert in das Material und wird anschließend in die Zwischengitterplätze der NaZn₁₃-Typ-Phase eingebaut. Im folgenden wird der Einfluss der oben beschriebenen Ni-Beschichtung auf die magnetischen Eigenschaften der LaFe_{11,6}Si_{1,4}-Legierung erläutert.

Die unbeschichtete LaFe_{n,6}Si_{1,4}-Legierung zeigt eine Entropieänderung ΔSₘₐₓ von 145 kJ/m³K bei 193 K und einer Magnetfeldänderung von 2 Tesla. Dabei beträgt die Halbwertsbreite 8.3 K und die relative Kühlleistung beträgt 1.5 MJ/m³.

Das gleichzeitige Hydrieren der LaFe_{11,6}Si_{1,4}-Legierung durch den Beschichtungprozess ermöglicht eine Erhöhung der Curie-Temperatur des Ausgangsmaterials von 185 K auf 330 K. Nach der Beschichtung mit Ni, die gleichzeitig zur Diffusion von Wasserstoff führt, verschiebt sich die Temperatur, bei welcher das Maximum der Entropieänderung auftritt, auf 330 K. Bei einer Magnetfeldänderung von 2 Tesla beträgt die maximale Entropieänderung ΔSₘₐₓ = 110 kJ/m³K, die Halbwertsbreite 7.5 K und die relative Kühlleistung 1.0 MJ/m³. Diese Änderung der magnetischen Eigenschaften ist auf die Diffusion von Wasserstoff in die interstitiellen Kristallgitterplätze der La(Fe,Si)₁₃ Phase zurückzuführen. Die Wasserstoffanalyse mittels Heissextraktion ergibt eine Wasserstoffkonzentration, die einer Zusammensetzung von LaFe_{11,6}Si_{1,4}H_{1.63} entspricht.

### Beispiel 2

Aus den Elementen La, Fe, Co und Si wird durch ein Lichtbogenschmelzen und anschließender Wärmebehandlung bei 1050 °C für 18 Tage ein tablettenförmiges Massivmaterial mit der Zusammensetzung LaFe_{11,6}Co_{0.2}Si_{1,2} und den Abmessungen von ungefähr 5 mm Durchmesser x 2 mm Höhe hergestellt. Das resultierende Material besteht zu 87 Gew.-% aus der NaZn₁₃-Typ-Phase und zu 13 Gew.-% aus α-Fe. Diese Legierung wird bei 400 °C in 5 bar Wasserstoffgas hydriert. Die Wasserstoffkonzentration von z = 1.6 wurde mittels Heissextraktion gemessen. Das entspricht einer Zusammensetzung von LaFe_{11,6}Co_{0,2}Si_{1,2}H_{1.6}.

Auf diese LaFe_{11,6}Co_{0,2}Si_{1,2}H_{1.6} Legierung wird durch 30 Minuten stromloses Metallisieren eine 1 µm dicke Schicht aus Ni aufgebracht. Das stromlose Metallisieren erfolgt aus einer auf 80°C erhitzten Lösung mit der Zusammensetzung konform A. Brenner [A. Brenner et al., Res. Natl. Bur. Std. 37 (1946) 31; Proc. Am. Electroplaters' Soc., 33 (1946) 23] bei einem pH Wert von 9.

Mit dieser Beschichtung der Tablette ist sie nun auch gegenüber den Wärmeübertragungsmedien aus öligen, alkoholischen oder wässrigen Lösungen korrosionsbeständig. Der Masseverlust, ermittelt durch Messungen in 0,01 M Schwefelsäure (pH = 2), zeigt eine wesentlich höhere Stabilität der beschichteten Tablette gegenüber dem eines unbeschichteten Materials. Das unbeschichtete Material zeigt eine Änderung der Masse um 5% nach 30 Minuten Eintauchen in der Lösung. Währendessen zeigt die erfindungsgemäß beschichtete Tablette auch nach 30 Minuten Eintauchen in der Lösung einen Masseverlust von weniger als 1 %.

## Patentansprüche

1. Verfahren zur Herstellung eines beschichteten magnetischen Legierungsmaterials, bei dem > 50 Vol.-% es magnetischen Legierungsmaterials eine Kristallstruktur vom NaZn₁₃-Typ und eine Zusammensetzung gemäß der Formel aufweist:
RₐFe_{100-a-x-y-z}TₓM_{y}L_{z}
mit
R = La oder eine Kombination von La mit Ce, Pr, Nd, Sm, Gd, Tb, Dy, Ho, Er, Tm, Yb, Lu und/oder Y,
T = mindestens ein Element ausgewählt aus der Gruppe Sc, Ti, V, Cr, Mn, Co, Ni, Cu und/oder Zn,
M = Al, Si, P, Ga, Ge, In und/oder Sn,
L = H, B, C und/oder N,
5 ≤ a ≤ 11 und 0.3 ≤ x ≤ 12 und 2 ≤ y ≤ 20 und 0.2 ≤ z ≤ 18, (alles in Atom-%),
wobei dessen Oberfläche mit einem Material, bestehend aus mindestens einem Element von der Gruppe Al, Si, C, Sn, Ti, V, Cd, Cr, Mn, W, Co, Ni, Cu, Zn, Pd, Ag, Pt, Au oder Kombinationen davon, aus der flüssigen Phase mittels stromlosen Metallisierens beschichtet wird.

2. Verfahren nach Anspruch 1, bei dem 80 - 90 Vol.-% des magnetisches Legierungsmaterials eingesetzt werden, das eine Kristallstruktur vom NaZn₁₃-Typ aufweist.

3. Verfahren nach Anspruch 1, bei dem zur Veränderung der Curie-Temperatur des magnetischen Legierungsmaterials die Bedingungen 2 ≤ z ≤ 15 und/oder 3 ≤ y ≤ 16 und/oder 0.5 ≤ x ≤ 9 (alles in Atom-%) realisiert wird, wobei mit variierendem Anteil z und/oder y und/oder x die Curie-Temperatur sich zwischen 170 K und 400 K ändert.

4. Verfahren nach Anspruch 1, bei dem das magnetische Legierungsmaterial in Form eines Bandes, eines Drahtes, einer Platte, einer Folie oder einer Flocke, einer Nadel, eines Schaumes oder in Form von Partikeln eingesetzt wird.

5. Verfahren nach Anspruch 1, bei dem die Schichtdicke der Beschichtung in Abhängigkeit von der Größe des magnetokalorischen Effektes des Legierungsmaterials ausgewählt wird, und vorteilhafterweise eine Schichtdicke von ≥ 0.5 µm bis ≤ 50 µm ausgewählt wird.

6. Verfahren nach Anspruch 1, bei dem zwischen magnetischen Legierungsmaterial und der Beschichtung eine oder mehrere Haftschichten angeordnet werden.

7. Verfahren nach Anspruch 1, bei dem die Oberfläche des unbeschichteten Legierungsmaterials geätzt wird.

## Claims

1. Process for producing a coated magnetic alloy material, wherein > 50% by volume of the magnetic alloy material has a crystal structure of the NaZn₁₃ type and a composition according to the formula:
RₐFe_{100-a-x-y-z}TₓM_{y}L_{z}
where
R = La or a combination of La with Ce, Pr, Nd, Sm, Gd, Tb, Dy, Ho, Er, Tm, Yb, Lu and/or Y,
T = at least one element selected from the group consisting of Sc, Ti, V, Cr, Mn, Co, Ni, Cu and/or Zn,
M = Al, Si, P, Ga, Ge, In and/or Sn,
L = H, B, C and/or N,
5 ≤ a ≤ 11 and 0.3 ≤ x ≤ 12 and 2 ≤ y ≤ 20 and 0.2 ≤ z ≤ 18 (all in atom%),
where the surface thereof is coated with a material consisting of at least one element from the group consisting of Al, Si, C, Sn, Ti, V, Cd, Cr, Mn, W, Co, Ni, Cu, Zn, Pd, Ag, Pt, Au and combinations thereof from the liquid phase by means of electroless metallization.

2. Process according to Claim 1, wherein 80-90% by volume of the magnetic alloy material having a crystal structure of the NaZn₁₃ type is used.

3. Process according to Claim 1, wherein the condition(s) 2 ≤ z ≤ 15 and/or 3 ≤ y ≤ 16 and/or 0.5 ≤ x ≤ 9 (all in atom%) is/are realized in order to change the Curie temperature of the magnetic alloy material, with the Curie temperature changing in the range from 170 K to 400 K with a varying proportion z and/or y and/or x.

4. Process according to Claim 1, wherein the magnetic alloy material is used in the form of a band, a wire, a plate, a foil or a floc, a needle, a foam or in the form of particles.

5. Process according to Claim 1, wherein the layer thickness of the coating is selected as a function of the size of the magnetocalorific effect of the alloy material and a layer thickness of from ≥ 0.5 µm to ≤ 50 µm is advantageously selected.

6. Process according to Claim 1, wherein one or more bonding layers are arranged between magnetic alloy material and the coating.

7. Process according to Claim 1, wherein the surface of the uncoated alloy material is pickled.

## Revendications

1. Procédé de fabrication d'un matériau d'alliage magnétique revêtu, selon lequel > 50 % en volume du matériau d'alliage magnétique présente une structure cristalline de type NaZn₁₃ et une composition selon la formule :
RₐFe_{100-a-x-y-z}TₓM_{y}L_{z}
avec
R = La ou une combinaison de La avec Ce, Pr, Nd, Sm, Gd, Tb, Dy, Ho, Er, Tm, Yb, Lu et/ou Y,
T = au moins un élément choisi dans le groupe constitué par Sc, Ti, V, Cr, Mn, Co, Ni, Cu et/ou Zn,
M = Al, Si, P, Ga, Ge, In et/ou Sn,
L = H, B, C et/ou N,
5 ≤ a ≤ 11 et 0,3 ≤ x ≤ 12 et 2 ≤ y ≤ 20 et 0,2 ≤ z ≤ 18 (tous en % atomique),
dont la surface est revêtue avec un matériau constitué par au moins un élément du groupe constitué par Al, Si, C, Sn, Ti, V, Cd, Cr, Mn, W, Co, Ni, Cu, Zn, Pd, Ag, Pt, Au ou leurs combinaisons, à partir de la phase liquide au moyen d'une métallisation sans courant.

2. Procédé selon la revendication 1, selon lequel 80 à 90 % en volume du matériau d'alliage magnétique qui présente une structure cristalline de type NaZn₁₃ est utilisé.

3. Procédé selon la revendication 1, selon lequel les conditions 2 ≤ z ≤ 15 et/ou 3 ≤ y ≤ 16 et/ou 0,5 ≤ x ≤ 9 (tous en % atomique) sont réalisées pour la modification de la température de Curie du matériau d'alliage magnétique, la température de Curie variant entre 170 K et 400 K lorsque les proportions z et/ou y et/ou x varient.

4. Procédé selon la revendication 1, selon lequel le matériau d'alliage magnétique est utilisé sous la forme d'une bande, d'un fil, d'une plaque, d'une feuille ou d'un flocon, d'une aiguille, d'une mousse ou sous la forme de particules.

5. Procédé selon la revendication 1, selon lequel l'épaisseur de couche du revêtement est choisie en fonction de l'importance de l'effet magnétocalorique du matériau d'alliage, et une épaisseur de couche de ≥ 0,5 µm à ≤ 50 µm est choisie de préférence.

6. Procédé selon la revendication 1, selon lequel une ou plusieurs couches adhésives sont agencées entre le matériau d'alliage magnétique et le revêtement.

7. Procédé selon la revendication 1, selon lequel la surface du matériau d'alliage non revêtue est corrodée.
